# EUROPEAN PATENT SPECIFICATION

(11) **EP 1 977 551 B1**
(45) Date of publication and mention of the grant of the patent: **01.01.2014**
(21) Application number: 07716933.2
(22) Date of filing: 23.01.2007
(51) Int. Cl.: G06F 21/12

(54) **BINDING A PROTECTED APPLICATION PROGRAM TO SHELL CODE**
BINDUNG EINES GESCHÜTZTEN ANWENDUNGSPROGRAMMS AN EINEN SHELLCODE
LIAISON D'UN PROGRAMME D'APPLICATION PROTÉGÉE À UN CODE D'ENVELOPPE

(30) Priority: 25.01.2006 US 338690
(43) Date of publication of application: 08.10.2008
(73) Proprietor: SafeNet, Inc., Belcamp, MD 21017 (US)
(72) Inventor: ELTETO, Laszlo, Irvine, California 92606 (US)
(74) Representative: de Zeeuw, Johan Diederick
(86) International application number: PCT/US2007/001800
(87) International publication number: WO 2007/087316

(56) References cited:
- WO-A1-01/37067
- WO-A2-03/009114
- US-A1- 2003 046 671
- US-A1- 2005 149 615
- US-A1- 2005 177 812
- US-B1- 6 202 176

## Description

### BACKGROUND OF THE INVENTION

### Field of the Invention

The invention described herein relates to digital rights management and more particularly to the prevention of unauthorized use of software.

### Related Art

One of the longstanding problems in the commercial distribution of software is controlling the use of the software. From the perspective of the software developer, only the party who has purchased or licensed the software may use the software. There may be other restrictions in place as well. For example, the software developer may wish to restrict use of the software on a particular mashine. The developer may also wish to restrict the time interval during which the software may be used. Such restrictions, if enforced, limit the conditions under which a software package is used. Use of a software package, i.e., use that is outside the boundaries of what is specified in restrictions such as those above, represents unauthorized use. From the perspective of the software developer, software should only be used under conditions specified by the software developer, in agreement with the purchaser or licensor. Use of the software package outside of these conditions represents use that has not been paid for. Such unauthorized use therefore represents money lost to the software developer.

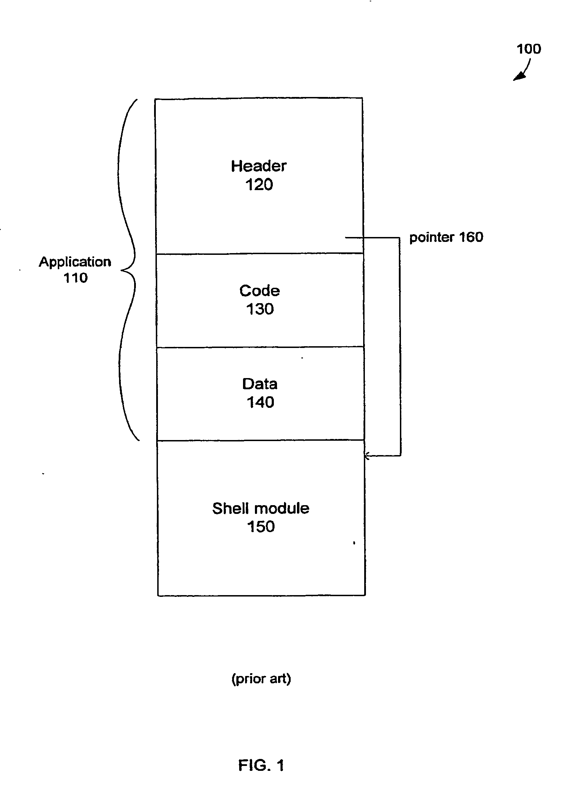

One solution to the problem of unauthorized use of software involves using an additional software module, known as a shell. This is illustrated in FIG. 1. An application program 110 comprises a header 120, followed by code 130 and data 140. Appended to the end of application 110 is a shell module, shell runtime code 150. A pointer 160 resides in header 120. Pointer 160 assures that shell runtime code 150 executes prior to execution of application 110.

The shell module 150 performs one or more security checks. These checks determine whether various conditions for the use of the software are being met. For example, shell module 150 may determine whether application 110 will be executing on an authorized machine. In addition, shell module 150 may check whether application 110 will be executing within the authorized time window. Shell module 150 may also check whether a security token, if required, is in place. If and only if all the checks in shell module 150 are passed, application 110 can then begin execution.

The use of such a shell module is not always sufficient, however. A hacker may, for example, separate the shell from the application. The shell module may be deleted, or functionally disconnected from the application so that security checks are never made. There is a need, therefore, for a mechanism through which a shell module can be bound to an application, such that if the shell module is deleted or functionally disconnected from the application, the application will not be useable.
The document WO-03/009114-A2 discloses a method of protecting an application module by overwriting its executable code at identified authorisation points with control transfers to a managed challenge system. The managed challenge system is constructed to include the overwritten executable code and performs an authorisation check upon acquiring control from an authorisation point. The managed challenge system is linked to the rewritten application module.
The document US-6202176-B1 discloses a method of preventing deliberate manipulation of program executions of software programs by preventing the overwriting of return addresses. A safeguard memory that cannot be addressed from outside the system is used for protecting the return addresses by evaluating safeguard information generated when the return addresses are stored.

### SUMMARY OF THE INVENTION

The invention described herein is a system and method for binding a protected application to a shell module. The shell module is appended to the application. The shell module executes prior to the execution of the application, and first creates a resource. After the shell module finishes execution, the application tries to access the created resource. If the access is successful, the application is allowed to proceed. Otherwise, the application terminates. The inability of the application to access the resource is an indication that the shell module never actually created the resource. This suggests that the shell module never executed; the shell module may have been either removed or functionally disconnected from the application. This further implies that the security functionality of the shell module has not executed. The application is therefore not permitted to execute, since the shell's security checks have probably not been performed.

Further embodiments, features, and advantages of the present invention, as well as the structure and operation of the various embodiments of the present invention, are described below with reference to the accompanying figures.

### BRIEF DESCRIPTION OF THE FIGURES

FIG. 1 illustrates an application program with an appended shell module, according to the prior art.

FIG. 2 illustrates a computing platform on which the invention may execute, according to an embodiment of the invention.

FIG. 3 is a block diagram illustrating an embodiment of the invention in which the shell module allocates a memory location that the application subsequently tries to access.

FIG. 4 is a flow chart illustrating the processing associated with the embodiment of FIG. 3.

FIG. 5 is a block diagram illustrating an embodiment of the invention in which the shell module creates a mutex that the application subsequently tries to access.

FIG. 6 is a flow chart illustrating the processing associated with the embodiment of FIG. 5.

### DETAILED DESCRIPTION OF THE INVENTION

A preferred embodiment of the present invention is now described with reference to the figures, where like reference numbers indicate identical or functionally similar elements. Also, in the figures, the left-most digit of each reference number corresponds to the figure in which the reference number is first used. While specific configurations and arrangements are discussed, it should be understood that this is done for illustrative purposes only. A person skilled in the relevant art will recognize that other configurations and arrangements can be used without departing from the spirit and scope of the invention. It will also be apparent to a person skilled in the relevant art that this invention can also be employed in a variety of other systems and applications.

### I. Overview

The invention described herein is a system and method for binding a protected application to a shell module. The shell module is appended to the application. The shell module executes prior to the execution of the application, and first creates a resource. After the shell module finishes execution, the application tries to access the created resource. If the access is successful, the application is allowed to proceed. Otherwise, the application terminates. The inability of the application to access the resource is an indication that the shell module never actually created the resource. This suggests that the shell module never executed; the shell module may have been either removed or functionally disconnected from the application. This further implies that the security functionality of the shell module has not executed. The application is therefore not permitted to execute, since the shell's security checks have probably not been performed.

### II. System

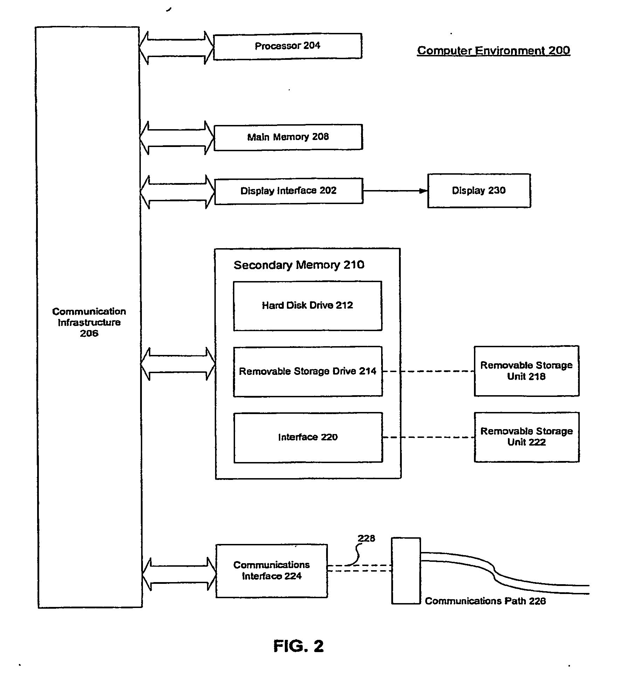

The invention described herein can take the form of software that executes in a computing environment such as the one illustrated in FIG. 2.

An example of a computer system 200 is shown in FIG. 2. The computer system 200 may include one or more processors, such as processor 204. The processor 204 may be connected to a communication infrastructure 206 (e.g., a communications bus or network). After reading this description, it will become apparent to a person skilled in the relevant art(s) how to implement the invention with respect to other computer systems and/or computer architectures.

Computer system 200 may include a display interface 202 that may forward graphics, text, and other data from the communication infrastructure 206 for display on the display unit 230.

Computer system 200 may also include a main memory 208, e.g., random access memory (RAM), and may also include a secondary memory 210. The secondary memory 210 may include, for example, a hard disk drive 212 and/or a removable storage drive 214, representing a magnetic tape drive, an optical disk drive, etc., but which is not limited thereto. The removable storage drive 214 may read from and/or write to a removable storage unit 218 in a well known manner. Removable storage unit 218, may represent a floppy disk, magnetic tape, optical disk, etc., which may be read by and/or written to by removable storage drive 214. As will be appreciated, the removable storage unit 218 may include a computer usable storage medium having stored therein computer software and/or data.

In alternative embodiments, secondary memory 210 may include other similar means for allowing computer programs or other instructions to be loaded into computer system 200. Such means may include, for example, a removable storage unit 222 and an interface 220. Examples of such may include, but are not limited to, a removable memory chip (such as an EPROM, or PROM) and associated socket, and/or other removable storage units 222 and interfaces 220 that may allow software and data to be transferred from the removable storage unit 222 to computer system 200.

Computer system 200 may also include a communications interface 224. Communications interface 224 may allow software and data to be transferred between computer system 200 and external devices. Examples of communications interface 224 may include, but are not limited to, a modem, a network interface (such as an Ethernet card), a communications port, a PCMCIA slot and card, etc. Software and data transferred via communications interface 224 are in the form of signals 228 which may be, for example, electronic, electromagnetic, optical or other signals capable of being received by communications interface 224. These signals 228 may be provided to communications interface 224 via a communications path (i.e., channel) 226. This channel 226 may carry signals 228 and may be implemented using wire or cable, fiber optics, a phone line, a cellular phone link, an RF link and/or other communications channels.

In this document, the terms "computer program medium" and "computer usable medium" are used to generally refer to media such as, but not limited to, removable storage unit 218, a hard disk installed in hard disk drive 212, and/or signals 228. These computer program media are means for providing software to computer system 200.

Computer programs (also called computer control logic) may be stored in main memory 208 and/or secondary memory 210. Computer programs may also be received via communications interface 224. Such computer programs, when executed, enable the computer system 200 to perform the features of the present invention as discussed herein. In particular, the computer programs, when executed, may enable the processor 204 to perform the present invention in accordance with the embodiments described below. Accordingly, such computer programs represent controllers of the computer system 200.

Software embodying the invention may be stored in a computer program product and loaded into computer system 200 using, for example, removable storage drive 214, hard drive 212, interface 220, or communications interface 224. The control logic (software), when executed by the processor 204, causes the processor 204 to perform the functions of the invention as described herein.

### III. Method

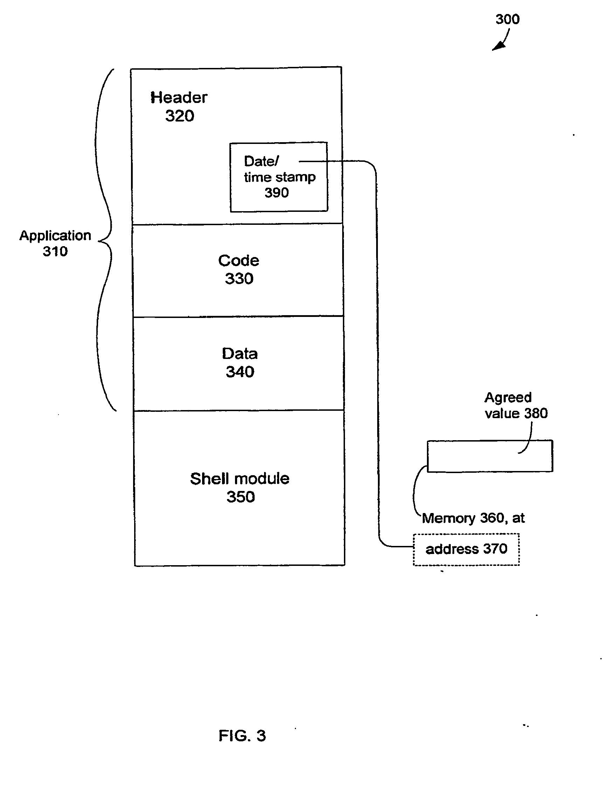

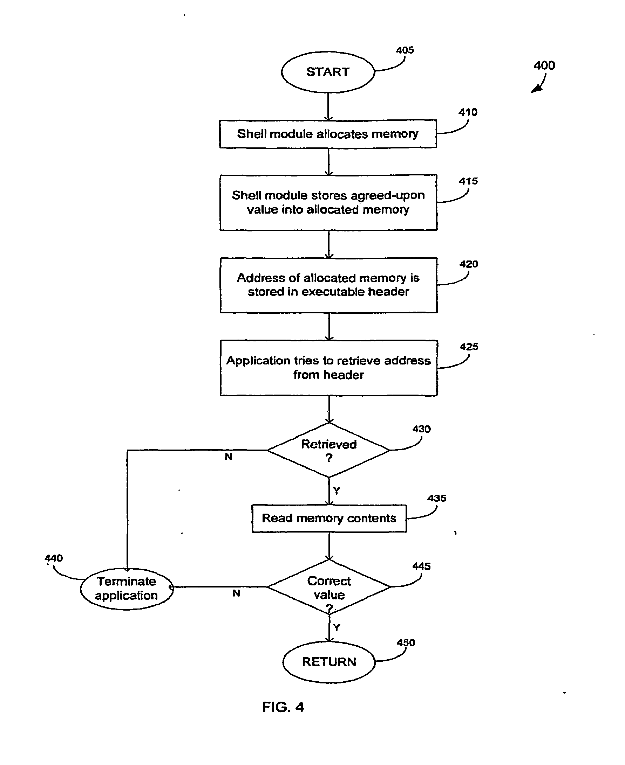

The processing of an embodiment of the invention is illustrated in FIGS. 3 and 4. In FIG. 3, a protected application 310 is shown as consisting of header 320, code 330, and data 340. Appended to the application 310 is shell runtime code 350. The overall processing has some similarities to that of FIG. 1, in that the shell module 350 executes prior to the execution of application 310. Among its other security related functions, shell module 350 allocates memory location 360. Memory location 360 is located at address 370. In addition to allocating memory 360, shell module 350 also stores an agreed upon value 380 in memory location 360. In an embodiment of the invention, the agreed upon value 380 can be a predetermined value provided by the developer of the application 310.

Shell module 350 then stores address 370 in a location readily accessible by the application. In the illustrated embodiment, the address 370 is stored in or with a date/time stamp 390, which is located within header 320.

Once the application begins to execute, the application retrieves address 370, goes to that address, i.e., to memory location 360, and attempts to read the agreed upon value 380. If the value that is read matches the agreed upon value 380, then the application proceeds. If the value does not match, the application 310 terminates. Moreover, if address 370 is not found by the application 310, then the application terminates.

Note that if a hacker succeeds in removing shell module 350, or otherwise functionally disconnects shell 350 from the application, then date/time stamp 390 will not receive an address, and the application will fail to access the memory location 360. Alternatively, the application may have some address in date/time stamp field 390, but the value found at that address would likely not match the agreed upon value 380.

In order to circumvent this sequence of checks, a hacker would now have to simulate the actions of shell module 350. The hacker would have to place an address in the location expected by the application, i.e., date/time stamp field 390. This would be difficult for a hacker to do.

Moreover, this could be made more difficult by obfuscating the stored address 370. The shell module 350 could, for example, take address 370, and combine it in a deterministic reversible manner with some known constant. Address 370 could be combined with the constant using a bitwise XOR operation, for example. The application 310 would then read the obfuscated address from date/time stamp 390 then apply the constant to the obfuscated address in order to recover the actual address 370. In an embodiment of the invention, some of all of the constant is supplied by the application developer.

The processing associated with the embodiment of FIG. 3 is presented in the flow chart of FIG. 4. The process begins at step 405. In step 410, the shell module allocates a memory location. In step 415, the shell module stores an agreed-upon value into the allocated memory location. As discussed above, the agreed-upon value may be provided by the software developer of the application. In step 420, the address of the allocated memory is stored in the executable header of the application. One possible location for storage of the address would be the date/time stamp of the header, as discussed above.

In step 425, the application attempts to retrieve the address from the header. In step 430, a determination is made as to whether this retrieval is successful. If not, the application terminates at step 440. If retrieval is successful, then the process continues at 435. Here, the memory contents are read. In step 445, a determination is made as to whether the correct value has been found in the allocated memory location. If not, the application terminates at step 440. If the correct value is found, as determined in step 445, then the application continues, and the process concludes at step 450.

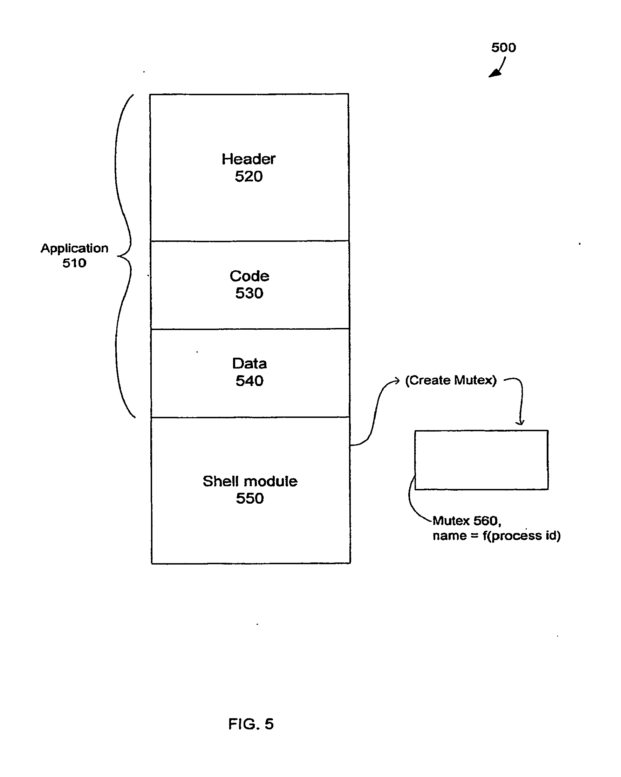

An alternative embodiment of the invention is shown in FIG. 5. Similar to previous illustrations, an application consists of code 530, along with header 520 and data 540. Again, a shell module 550 is appended, where the shell module 550 is used to create a resource. In this embodiment, the shell module 550 creates a mutual exclusion object, or "mutex" 560. A mutex is a program object used by program threads to share access to, say, a data structure such as a file. Any thread that needs the file must lock the mutex against other threads while using the file. The mutex is unlocked when the file is no longer needed or the routine is completed.

Here, the created mutex 560 is given a name by the shell module 550. The mutex name is based on name information. One example of name information is the process ID. The mutex name can therefore be the process ID, or can be based on the process ID. In the illustrated embodiment, the name for the mutex 560 is the value of a function f(process ID). After the shell module 550 completes execution, control returns to code 530.

Code 530 then attempts to recreate the name of the mutex 560. To do so in the example shown, code 530 would have to create the name on the basis of the process ID if the name is a function of the ID. If the name is simply the process ID, code 530 simply obtains the process ID. In either event, code 530 would then attempt to access the named mutex 560. The inability to access mutex 560 would be an indication that the shell module 550 has been deleted, disabled, or otherwise functionally disconnected from the application 510. If shell module 550 were not present or had been disabled, no mutex having a name based on the process ID would have been created by the shell module 550. Code 530 would then be attempting to access a resource that had not been created, and would obviously be unable to do so.

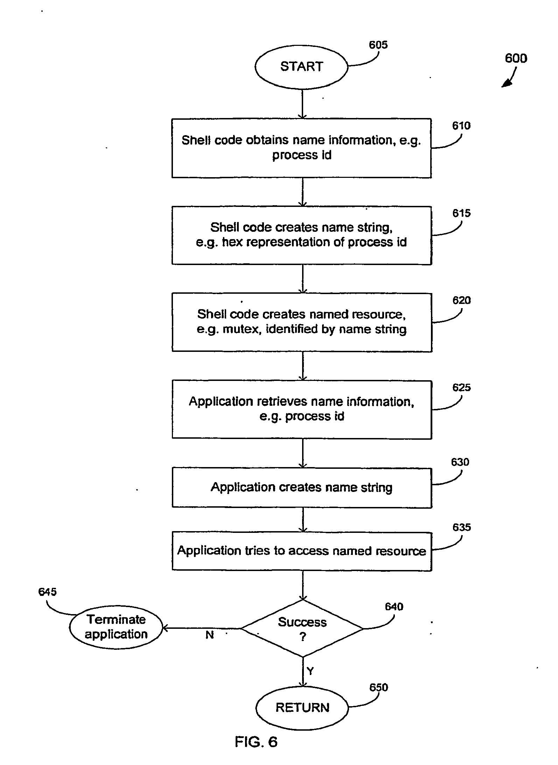

The processing of this embodiment of the invention is illustrated in the flow chart of FIG. 6. This process starts at step 605. In step 610, the shell module obtains name information, i.e., information that will be used to name the mutex to be created. In the example illustrated, the process ID is used as the name information. In step 615, the shell module creates a name string, such as a hex representation of the process ID. In step 620, the shell module creates a named resource such as a mutex, identified by the name string. In step 625, the application retrieves the name information. In step 630, the application creates a name string based on the name information. In step 635, the application attempts to access the resource bearing that name. In step 640, a determination is made as to whether the access to the named resource is successful. If not, the application terminates in step 645. If the attempt to access the named resource is successful, then the process continues at step 650.

Note that in alternative embodiments of the invention, the name information can come from several sources. In the illustrated embodiment, the name information is the process ID. Alternatively, other process specific information can be used to derive a name for the mutex. One possibility is the start time for the process. The name would then be the start time or a function thereof. In yet another alternative embodiment, the name can be based on name information provided by the software developer of the application.

Note also that in alternative embodiments, an object other than a mutex can be created by the shell module. The shell module may create a semaphore, for example, or another sort of named resource. As in the mutex embodiment, the resource can be named on the basis of name information derived from the process or supplied by the application developer. The application can verify the operation of the shell module by attempting to access the resource using the name.

### IV. Conclusion

While some embodiments of the present invention have been described above, it should be understood that it has been presented by way of examples only and not meant to limit the invention. It will be understood by those skilled in the art that various changes in form and detail may be made therein without departing from the spirit and scope of the invention as defined in the appended claims. Thus, the breadth and scope of the present invention should not be limited by the above-described exemplary embodiments, but should be defined only in accordance with the following claims and their equivalents.

## Claims

1. A method of binding a security code shell module to an application, comprising the steps of:
a. creating a resource, performed by the shell module;
b. attempting to access the resource performed by the application; and
c. if the access is not successful, terminating the application, **characterized in that** the resource comprises allocated memory, said method further comprising:
d. storing an agreed upon value into the allocated memory;
e. saving an indication of the address of the allocated memory, performed by the shell module after step a. and before step b., wherein the indication of the address of the allocated memory is saved in an executable header of the application.

2. The method of claim 1, wherein the indication of the address comprises an address of the allocated memory, optionally in combination with a constant known to both the application and the shell module.

3. The method of claim 1, wherein said step b. comprises:
i. attempting to retrieve the indication of the address from the executable header, wherein failure to retrieve the indication of the address from the executable header represents unsuccessful access of the resource.

4. The method of claim 3, wherein said step b further comprises:
ii. reading the contents of the allocated memory; and
iii. determining if the read contents match the agreed upon value, wherein failure to match the agreed upon value represents unsuccessful access of the resource.

5. The method of any of claims 1 to 4, wherein the resource comprises a named resource wherein said step a comprises deriving a name for the named resource and wherein said derivation of the name for the named resource comprises:
i. obtaining name information; and
ii. creating the name based on the name information and wherein said step b. comprises:
i. retrieving the name information;
ii. creating the name based on the name information; and
iii. attempting to access the named resource using the created name.

6. The method of claim 5, wherein the name information comprises information supplied by a developer of the application.

7. The method of claim 5, wherein the name information comprises a process specific value.

8. The method of claim 7, wherein said process specific value comprises the start time of a process.

9. The method of claim 7, wherein said process specific value comprises a process ID.

10. A computer program product comprising a computer useable medium having computer program logic recorded thereon, which, when executed on a computer, binds a security code shell module to an application, said computer program logic comprising:
first computer program logic, in the shell module, that causes the computer to create a resource;
second computer program logic, in the application, that causes the computer to attempt to access the resource; and
third computer program logic that causes the computer to terminate the application if the access is not successful, **characterized in that** the resource comprises allocated memory, said computer program product further comprising:
fourth computer program logic that causes the computer to store an agreed upon value into the allocated memory; and
fifth computer program logic that causes the computer to save an indication of the address of the allocated memory, wherein said fourth and fifth computer program logic execute after said first and before said second computer program logic, wherein the indication of the address of the allocated memory is saved in an executable header of the application.

11. The computer program product of claim 10, wherein said second computer program logic comprises:
i. computer program logic that causes the computer to attempt to retrieve the indication of the address from the executable header, wherein failure to retrieve the indication of the address from the executable header represents unsuccessful access of the resource;
ii. computer program logic that causes the computer to read the contents of the allocated memory; and
iii. computer program logic that causes the computer determine if the read contents match the agreed upon value, wherein failure to match the agreed upon value represents unsuccessful access of the resource.

12. The computer program product of claim 10 or 11, wherein the resource comprises a named resource, and wherein said first computer program logic comprises:
i. computer program logic that causes the computer to obtaining name information;
ii. computer program logic that causes the computer to create a name for the resource based on the name information
and wherein said second computer program logic comprises:
i. computer program logic that causes the computer to retrieve the name information;
ii. computer program logic that causes the computer to create the name based on the name information; and
iii. computer program logic that causes the computer to attempt to access the named resource using the created name, wherein failure to access the named resource using the created name represents unsuccessful access of the resource.

## Patentansprüche

1. Ein Verfahren zum Binden eines Sicherheitscodeshellmoduls an eine Anwendung, das die folgenden Schritte beinhaltet:
a. Erzeugen eines Betriebsmittels, durchgeführt durch das Shellmodul;
b. Versuchen des Zugriffs auf das Betriebsmittel, durchgeführt durch die Anwendung; und
c. wenn der Zugriff nicht erfolgreich ist, Beenden der Anwendung, **dadurch gekennzeichnet, dass** das Betriebsmittel zugeteilten Speicher beinhaltet, wobei das Verfahren ferner Folgendes beinhaltet:
d. Abspeichern eines vereinbarten Werts in dem zugeteilten Speicher;
e. Speichern einer Anzeige der Adresse des zugeteilten Speichers, durchgeführt durch das Shellmodul nach Schritt a. und vor Schritt b., wobei die Anzeige der Adresse des zugeteilten Speichers in einem ausführbaren Header der Anwendung gespeichert ist.

2. Verfahren gemäß Anspruch 1, wobei die Anzeige der Adresse eine Adresse des zugeteilten Speichers beinhaltet, optional in Kombination mit einer Konstante, die sowohl der Anwendung als auch dem Shellmodul bekannt ist.

3. Verfahren gemäß Anspruch 1, wobei der Schritt b. Folgendes beinhaltet:
i. Versuchen des Wiedererlangens der Anzeige der Adresse aus dem ausführbaren Header, wobei das Misslingen des Wiedererlangens der Anzeige der Adresse aus dem ausführbaren Header einen nicht erfolgreichen Zugriff des Betriebsmittels bedeutet.

4. Verfahren gemäß Anspruch 3, wobei der Schritt b ferner Folgendes beinhaltet:
ii. Lesen der Inhalte des zugeteilten Speichers; und
iii. Bestimmen, ob die Leseinhalte mit dem vereinbarten Wert übereinstimmen, wobei das Misslingen der Übereinstimmung mit dem vereinbarten Wert nicht erfolgreichen Zugriff des Betriebsmittels bedeutet.

5. Verfahren gemäß einem der Ansprüche 1 bis 4, wobei das Betriebsmittel ein benanntes Betriebsmittel beinhaltet, wobei der Schritt a das Ableiten eines Namens für das benannte Betriebsmittel beinhaltet und wobei die Ableitung des Namens für das benannte Betriebsmittel Folgendes beinhaltet:
i. Erlangen von Namensinformationen; und
ii. Erzeugen des Namens auf der Grundlage der Namensinformationen,
und wobei der Schritt b. Folgendes beinhaltet:
i. Wiedererlangen der Namensinformationen;
ii. Erzeugen des Namens auf der Grundlage der Namensinformationen; und
iii. Versuchen des Zugriffs auf das benannte Betriebsmittel unter Verwendung des erzeugten Namens.

6. Verfahren gemäß Anspruch 5, wobei die Namensinformationen durch einen Entwickler der Anwendung gelieferte Informationen beinhalten.

7. Verfahren gemäß Anspruch 5, wobei die Namensinformationen einen prozessspezifischen Wert beinhalten.

8. Verfahren gemäß Anspruch 7, wobei der prozessspezifische Wert die Startzeit eines Prozesses beinhaltet.

9. Verfahren gemäß Anspruch 7, wobei der prozessspezifische Wert eine Prozess-ID beinhaltet.

10. Ein Computerprogrammprodukt, das ein computernutzbares Medium beinhaltet, auf dem eine Computerprogrammlogik aufgezeichnet ist, die, wenn auf einem Computer ausgeführt, ein Sicherheitscodeshellmodul an eine Anwendung bindet, wobei die Computerprogrammlogik Folgendes beinhaltet:
erste Computerprogrammlogik in dem Shellmodul, die bewirkt, dass der Computer ein Betriebsmittel erzeugt;
zweite Computerprogrammlogik in der Anwendung, die bewirkt, dass der Computer den Zugriff auf das Betriebsmittel versucht; und
dritte Computerprogrammlogik, die bewirkt, dass der Computer die Anwendung beendet, wenn der Zugriff nicht erfolgreich ist, **dadurch gekennzeichnet, dass** das Betriebsmittel zugeteilten Speicher beinhaltet, wobei das Computerprogrammprodukt ferner Folgendes beinhaltet:
vierte Computerprogrammlogik, die bewirkt, dass der Computer einen vereinbarten Wert in dem zugeteilten Speicher abspeichert; und
fünfte Computerprogrammlogik, die bewirkt, dass der Computer eine Anzeige der Adresse des zugeteilten Speichers speichert, wobei die vierte und fünfte Computerprogrammlogik nach der ersten und vor der zweiten Computerprogrammlogik ausgeführt werden, wobei die Anzeige der Adresse des zugeteilten Speichers in einem ausführbaren Header der Anwendung gespeichert ist.

11. Computerprogrammprodukt gemäß Anspruch 10, wobei die zweite Computerprogrammlogik Folgendes beinhaltet:
i. Computerprogrammlogik, die bewirkt, dass der Computer versucht, die Anzeige der Adresse aus dem ausführbaren Header wiederzuerlangen, wobei das Misslingen des Wiedererlangens der Anzeige der Adresse aus dem ausführbaren Header nicht erfolgreichen Zugriff des Betriebsmittels bedeutet;
ii. Computerprogrammlogik, die bewirkt, dass der Computer die Inhalte des zugeteilten Speichers liest; und
iii. Computerprogrammlogik, die bewirkt, dass der Computer bestimmt, ob die Leseinhalte mit dem vereinbarten Wert übereinstimmen, wobei das Misslingen der Übereinstimmung mit dem vereinbarten Wert nicht erfolgreichen Zugriff des Betriebsmittels bedeutet.

12. Computerprogrammprodukt gemäß Anspruch 10 oder 11, wobei das Betriebsmittel ein benanntes Betriebsmittel beinhaltet, und wobei die erste Computerprogrammlogik Folgendes beinhaltet:
i. Computerprogrammlogik, die bewirkt, dass der Computer Namensinformationen erlangt;
ii. Computerprogrammlogik, die bewirkt, dass der Computer einen Namen für das Betriebsmittel auf der Grundlage der Namensinformationen erzeugt,
und wobei die zweite Computerprogrammlogik Folgendes beinhaltet:
i. Computerprogrammlogik, die bewirkt, dass der Computer Namensinformationen wiedererlangt;
ii. Computerprogrammlogik, die bewirkt, dass der Computer den Namen auf der Grundlage der Namensinformationen erzeugt; und
iii. Computerprogrammlogik, die bewirkt, dass der Computer Zugriff auf das benannte Betriebsmittel unter Verwendung des erzeugten Namens versucht, wobei das Misslingen des Zugriffs auf das benannte Betriebsmittel unter Verwendung des erzeugten Namens einen nicht erfolgreichen Zugriff des Betriebsmittels bedeutet.

## Revendications

1. Un procédé pour lier un module shell de code de sécurité à une application, comprenant les étapes consistant :
a. à créer une ressource, ce qu'effectue le module shell ;
b. à tenter d'accéder à la ressource, ce qu'effectue l'application ; et
c. si l'accès est infructueux, à mettre fin à l'application, **caractérisé en ce que** la ressource comprend une mémoire allouée, ledit procédé comprenant en outre :
d. le fait de stocker une valeur convenue dans la mémoire allouée ;
e. le fait de sauvegarder une indication de l'adresse de la mémoire allouée, ce qu'effectue le module shell après l'étape a. et avant l'étape b., dans lequel l'indication de l'adresse de la mémoire allouée est sauvegardée dans un en-tête exécutable de l'application.

2. Le procédé de la revendication 1, dans lequel l'indication de l'adresse comprend une adresse de la mémoire allouée, facultativement en combinaison avec une constante connue à la fois de l'application et du module shell.

3. Le procédé de la revendication 1, dans lequel ladite étape b. comprend :
i. le fait de tenter de récupérer l'indication de l'adresse de l'en-tête exécutable, la non-récupération de l'indication de l'adresse de l'en-tête exécutable représentant un accès infructueux à la ressource.

4. Le procédé de la revendication 3, dans lequel ladite étape b comprend en outre :
ii. le fait de lire le contenu de la mémoire allouée ; et
iii. le fait de déterminer si le contenu lu équivaut à la valeur convenue, la non-équivalence avec la valeur convenue représentant un accès infructueux à la ressource.

5. Le procédé de n'importe lesquelles des revendications 1 à 4, dans lequel la ressource comprend une ressource nommée, ladite étape a comprenant le fait de dériver un nom pour la ressource nommée et ladite dérivation du nom pour la ressource nommée comprenant :
i. le fait d'obtenir des informations de nom ; et
ii. le fait de créer le nom sur la base des informations de nom et ladite étape b. comprenant :
i. le fait de récupérer les informations de nom ;
ii. le fait de créer le nom sur la base des informations de nom ; et
iii. le fait de tenter d'accéder à la ressource nommée en utilisant le nom créé.

6. Le procédé de la revendication 5, dans lequel les informations de nom comprennent des informations fournies par un développeur de l'application.

7. Le procédé de la revendication 5, dans lequel les informations de nom comprennent une valeur spécifique au processus.

8. Le procédé de la revendication 7, dans lequel ladite valeur spécifique au processus comprend le moment du début d'un processus.

9. Le procédé de la revendication 7, dans lequel ladite valeur spécifique au processus comprend un identificateur de processus.

10. Un produit-programme informatique comprenant un support utilisable par un ordinateur sur lequel est enregistrée une logique de programme informatique qui, lorsqu'elle est exécutée sur un ordinateur, lie un module shell de code de sécurité à une application, ladite logique de programme informatique comprenant :
une première logique de programme informatique, dans le module shell, qui amène l'ordinateur à créer une ressource ;
une deuxième logique de programme informatique, dans l'application, qui amène l'ordinateur à tenter d'accéder à la ressource ; et
une troisième logique de programme informatique qui amène l'ordinateur à mettre fin à l'application si l'accès est infructueux, **caractérisé en ce que** la ressource comprend une mémoire allouée, ledit produit-programme informatique comprenant en outre :
une quatrième logique de programme informatique qui amène l'ordinateur à stocker une valeur convenue dans la mémoire allouée ; et
une cinquième logique de programme informatique qui amène l'ordinateur à sauvegarder une indication de l'adresse de la mémoire allouée, ladite quatrième et
ladite cinquième logique de programme informatique s'exécutant après ladite première et avant ladite deuxième logique de programme informatique, dans lequel l'indication de l'adresse de la mémoire allouée est sauvegardée dans un en-tête exécutable de l'application.

11. Le produit-programme informatique de la revendication 10, dans lequel ladite deuxième logique de programme informatique comprend :
i. une logique de programme informatique qui amène l'ordinateur à tenter de récupérer l'indication de l'adresse de l'en-tête exécutable, la non-récupération de l'indication de l'adresse de l'en-tête exécutable représentant un accès infructueux à la ressource ;
ii. une logique de programme informatique qui amène l'ordinateur à lire le contenu de la mémoire allouée ; et
iii. une logique de programme informatique qui amène l'ordinateur à déterminer si le contenu lu équivaut à la valeur convenue, la non-équivalence avec la valeur convenue représentant un accès infructueux à la ressource.

12. Le produit-programme informatique de la revendication 10 ou de la revendication 11, dans lequel la ressource comprend une ressource nommée, et dans lequel ladite première logique de programme informatique comprend :
i. une logique de programme informatique qui amène l'ordinateur à obtenir des informations de nom ;
ii. une logique de programme informatique qui amène l'ordinateur à créer un nom pour la ressource sur la base des informations de nom
et dans lequel ladite deuxième logique de programme informatique comprend :
i. une logique de programme informatique qui amène l'ordinateur à récupérer les informations de nom ;
ii. une logique de programme informatique qui amène l'ordinateur à créer le nom sur la base des informations de nom ; et
iii. une logique de programme informatique qui amène l'ordinateur à tenter d'accéder à la ressource nommée en utilisant le nom créé, le non-accès à la ressource nommée en utilisant le nom créé représentant un accès infructueux à la ressource.
